# EUROPÄISCHE PATENTSCHRIFT

(11) **EP 0 461 304 B1**
(45) Veröffentlichungstag und Bekanntmachung des Hinweises auf die Patenterteilung: **05.04.1995**
(21) Anmeldenummer: 90120307.5
(22) Anmeldetag: 23.10.1990
(51) Int. Cl.: B65G 67/60, B65G 69/18

(54) **Einrichtung zum staubarmen bzw. staubfreien Beladen umschlossener Räume**
Installation for loading holds with little or without dust
Installation pour le chargement d'enceintes avec un peu ou pas de poussière

(30) Priorität: 15.06.1990 DE 4019229; 10.08.1990 DE 4025336
(43) Veröffentlichungstag der Anmeldung: 18.12.1991
(73) Patentinhaber: PWH Anlagen + Systeme GmbH, D-66386 St. Ingbert-Rohrbach (DE)
(72) Erfinder: Steckel, Horst, D-66386 St. Ingbert (DE)
(74) Vertreter: John, Ernst

(56) Entgegenhaltungen:
- DE-A- 2 656 618
- DE-B- 2 627 535

## Beschreibung

Die Erfindung betrifft eine Einrichtung zum staubarmen bzw. staubfreien Beladen umschlossener Räume mit schüttförmigen Gütern, insbesondere zum Beladen von Schiffen, mit einer im wesentlichen horizontalen Zuführeinrichtung, einer am freien Ende derselben vorgesehenen Beladevorrichtung in Form eines im wesentlichen durchgängigen Fallrohres, einer am unteren Ende des Fallrohres angeordneten, sich in Abhängigkeit vom aufgebauten Druck bis zu einem vorgegebenen Wert öffnende Verschlußeinrichtung.

Durch das deutsche Gebrauchsmuster DE-U-89 07 121 ist eine solche Einrichtung zum staubfreien Beladen, insbesondere mit schüttförmigen Gütern, bekannt, die mindestens eine Zuführeinrichtung aufweist, die mit einem im wesentlichen vertikal sich erstreckenden, im Bereich der unteren Austrittsöffnung durch mindestens ein Verschlußelement verschließbaren, rohr- oder schlauchförmigen Element zusammenwirkt. Das Verschlußelement ist in Abhängigkeit von dem Gewicht der darauf lastenden Schüttgutsäule im Öffnungssinne betätigbar und bei Reduzierung des Gewichtes selbsttätig verschließbar. Das Verschlußelement ist durch mehrere einseitig gelagerte und sich im wesentlichen radial nach innen erstreckende Klappen gebildet, die durch Federkraft oder durch damit zusammenwirkende Gewichte in ihre Ausgangsposition zurückbewegbar sind. Mit dieser Vorrichtung ist zwar bereits ein staubarmes Beladen möglich, wobei jedoch oberhalb des Materialpolsters eine verhältnismäßig starke Staubentwicklung stattfindet, die u.U. eine größere Entstaubungsanlage außerhalb des Fallrohres erforderlich machen würde. Ferner nachteilig ist, daß infolge schlagartig auftretender Materialströme das Gewicht auch schlagartig auf die feder- oder gewichtsbelasteten Klappen durchschlägt und somit ein ungewollt schnelles Öffnen mit damit verbundener Staubbelastung bewirkt wird. Darüberhinaus kann es in Abhängigkeit von den zu beladenden Schüttgütern geschehen, daß im Bereich des Materialpolsters sich sogenannte Brücken bilden, die dann zu einer Verdichtung des Materials führen, so daß eine u.U. aufwendige und auch gefährliche Abreinigung des Fallrohres notwendig werden kann.

Dem deutschen Gebrauchsmuster DE-U-71 35 192 ist eine Vorrichtung zum staubarmen Verladen von frei fließenden Schüttgütern in Fallrohrleitungen zu entnehmen, an deren unterem Ende eine steuerbare Absperrvorrichtung angeordnet ist. Die Absperrvorrichtung ist zugleich als Austragevorrichtung, vorzugsweise in Form einer Transportschnecke ausgebildet, wobei die Absperr- und Austragevorrichtung an einem Kugeldrehkranz aufgehängt ist. Am eintrittsseitigen Ende der Rohrleitung ist ein Rohreinlaufbehälter mit einem zur Steuerung der Fördergeschwindigkeit der Austragsvorrichtung dienenden Maximum- und Minimumfüllstandsgeber angeordnet. Die Austragseinrichtung ist über den Drehkranz im wesentlichen horizontal angeordnet, so daß es auch hier geschehen kann, daß im Fallrohr oberhalb der Transportschnecke sich ein Materialpolster bildet, was in Abhängigkeit von den unterschiedlichen Materialien auch zu Brückenbildungen führen kann. Im Gegensatz zum vorab angesprochenen Gebrauchsmuster ist hier die Abreinigung noch verhältnismäßig schwieriger, da zunächst einmal die Transportschnecke entfernt werden muß. Im Hinblick auf diese gewählte Anordnung besteht u.U. bei kleineren Schiffen die Gefahr, daß die Transportschnecke nicht in die Lukendeckel eintauchen kann. Desweiteren besteht die Gefahr, daß infolge des geneigt angeordneten Fallrohres die Fallgeschwindigkeit, insbesondere bei pulverförmigen Schüttgütern nicht ausreicht, um das Material bis in den Bereich der Transportschnecke zu bewegen.

Ziel der Erfindung ist es, die im gattungsbildenden Teil des ersten Patentanspruches beschriebene Einrichtung dahingehend weiterzubilden, daß unabhängig von den durchzusetzenden Materialien ein staubarmes bzw. staubfreies Beladen realisierbar ist. Darüberhinaus soll die Einrichtung auch bei kleineren Binnenschiffen in der Lage sein, ein Trimmen der Laderäume zu ermöglichen.

Diese Aufgabe wird erfindungsgemäß dadurch gelöst, daß im unteren Bereich des Fallrohres eine an sich bekannte Zwangsaustragsvorrichtung in Form einer in der Längsachse des unteren Fallrohrbereiches angeordneten Transportschnecke, die über Verbindungselemente mit einem außerhalb des Fallrohres vorgesehenen Antrieb zusammenwirkt, vorgesehen ist und daß das im Bereich seines oberen Endes gegenüber der es aufnehmenden Zuführeinrichtung kardanisch gelagerte Fallrohr ohne weitere Gelenkpunkte und ohne teleskopartige Verbindungen ausgebildet ist.

Dadurch, daß das Fallrohr im wesentlichen vertikal angeordnet und mit einer kardanischen Lagerung in seinem oberen Bereich versehen ist, besteht kein Problem, das Fallrohr einerseits in beengte Luken einzubringen und andererseits ein Trimmen von Laderäumen zu ermöglichen, indem das Fallrohr um den Gelenkpunkt in die entsprechenden Bereiche geschwenkt bzw. gedreht wird. Das Fallrohr ist im wesentlichen axial durchgängig ausgebildet, so daß ein störungsfreier Materialtransport gewährleistet werden kann. Auch wenn ein - bei Bedarf notwendiger - abgewinkelter Bereich vorgesehen werden muß, kann dieser so angeordnet werden, daß das Material, ohne größere Abbremsung zu erfahren, in freiem Fall bis in den unteren Bereich des Fallrohres, d.h. bis in den Bereich der Transportschnecke durchrutschen kann.

Der aus Gründen der Zugänglichkeit außerhalb des Fallrohres vorgesehene Antrieb kann bei abgewinkeltem Fallrohr im Bereich des abgewinkelten Fallrohrbereiches vorgesehen werden, wobei das wellenförmig ausgebildete Verbindungselement in der Ebene der Längsachse der Transportschnecke liegt, um so Zwängungen zu vermeiden.

Alternativ dazu besteht bei einem axial durchgehenden, ggf. aus Segmenten zusammengesetzten Fallrohr die Möglichkeit, die Verbindung zwischen Antrieb und Transportschnecke durch eine Gelenkwelle zu realisieren, deren Enden jeweils mit dem Antrieb des Antriebsmotors sowie der Antriebswelle der Transportschnecke verbunden sind und so die Kraftübertragung gewährleistet wird. Der Anlenkbereich der Gelenkwelle an der Antriebswelle der Transportschnecke wird vorzugsweise mittels einer Schutzvorrichtung abgedeckt, damit die hier vorhandenen Lagerstellen nicht durch Schmutzeinwirkung beeinträchtigt werden.

Damit auch bei schwer zu handhabenden Schüttgütern eine Brückenbildung (Verstopfung) oberhalb der Transportschnecke mit Sicherheit vermieden wird, ist oberhalb derselben eine Lockerungsvorrichtung vorgesehen, die vorzugsweise aus ggf. abgewinkelten Stangen gebildet ist, die radial oder tangential an der Antriebswelle in unterschiedlichen Höhen, vorzugsweise nach Art einer Schraubenlinie, verlagert sind. Sollte die so ausgelegte Lockerungsvorrichtung bei bestimmten Schüttgütern als nicht ausreichend angesehen werden, so wird weitergehend vorgeschlagen, Stangen von der Rohrwand ausgehend, radial nach innen zu führen. Die weiteren Stäbe sind vorzugsweise dergestalt angeordnet, daß sie axial zwischen den mit der Antriebswelle zusammenwirkenden Stangen zu liegen kommen. Durch diese Maßnahme wird u.a. auch der Vorteil erzielt, daß zusammengebackene Schollen vor ihrem Eintritt in die Transportschnecke zertrümmert werden und nicht oberhalb der Lockerungsvorrichtung verbleiben. Eine Verstopfung des Fallrohres bzw. der Transportschnecke erscheint somit ausgeschlossen zu sein. Insofern kann die Transportschnecke selber axial kurz bauend ausgebildet werden, d.h. es sind nur einige Windungen notwendig, um den Materialaustrag zu gewährleisten. Gemäß dieser Bauweise wird die Transportschnecke samt Lockerungsvorrichtung einerseits leichter und ist andererseits preiswerter herstellbar.

Zur Verbesserung des Geräuschverhaltens beim Durchsatz der Schüttgüter wird weiterhin vorgeschlagen, die Windungen der Transportschnecke mit einem Belag, insbesondere einem Gummi- oder Kunststoffbelag, zu versehen. Die Austragsleistung der Transportschnecke ist hierbei größer ausgelegt als die Leistung der Zuführeinrichtung, damit eine Überschüttung des Fallrohres vermieden wird und auch keine zu hohe Materialsäule oberhalb der Transportschnecke gebildet werden kann.

Die Erfindung ist anhand eines Ausführungsbeispieles in der Zeichnung dargestellt und wird wie folgt beschrieben. Es zeigen:
- Figur 1: - Beladeeinrichtung mit abgewinkeltem Fallrohr sowie Zwangsaustragevorrichtung
- Figur 2: - Beladeeinrichtung mit durchgehendem Fallrohr sowie Zwangsaustragevorrichtung.
- Figur 3: - Teilansicht des unteren Fallrohrbereiches samt Lockerungsvorrichtung

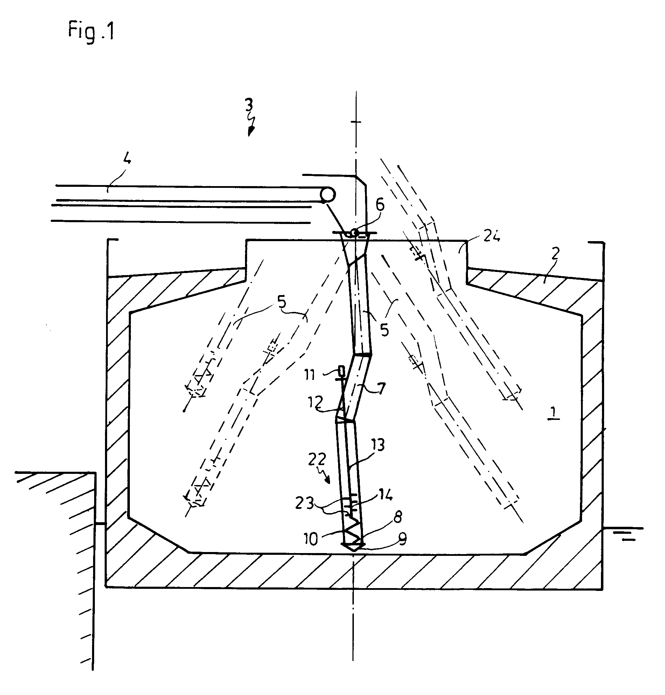

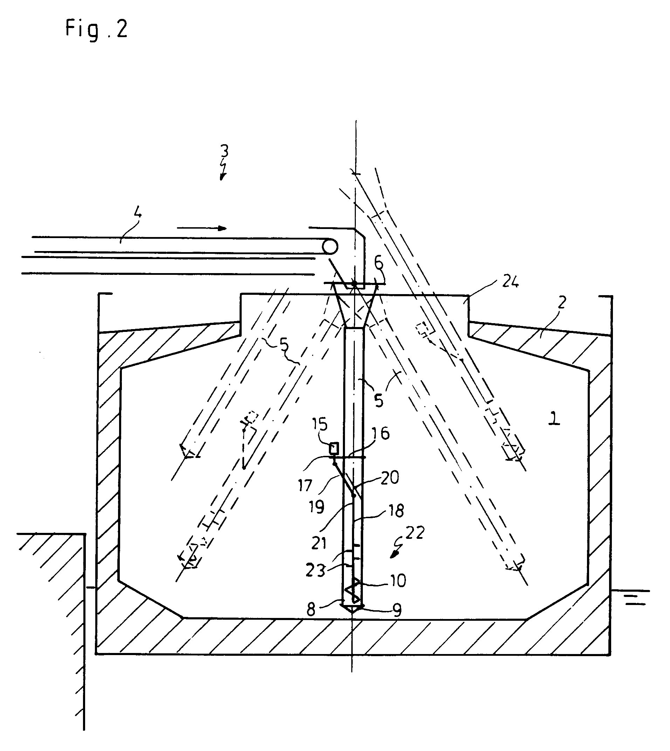

Die Figuren 1 und 2 zeigen als zu beladenden umschlossenen Raum den Laderaum 1 eines Schiffes 2. Die Einrichtung 3 zum staubarmen bzw. staubfreien Beladen wird gebildet durch eine im wesentlichen horizontale Zuführeinrichtung 4 in Form eines Förderbandes sowie ein Fallrohr 5, das in seinem oberen Bereich mit einem Kardangelenk 6 versehen und gegenüber der Zuführeinrichtung 4 verlagert ist.

Das Fallrohr 5 gemäß Figur 1 ist mit einem abgewinkelten Bereich 7 versehen, während das Fallrohr 5 gemäß Figur 2 als durchgehendes Fallrohr ausgebildet ist.

In beiden Fällen ist am freien Ende 8 der Fallrohre 5 eine Verschlußeinrichtung 9 vorgesehen, wie sie beispielsweise im deutschen Gebrauchsmuster G 89 07 121 beschrieben ist. Im Auslaufbereich, d.h. im unteren Bereich 8 des Fallrohres 5 ist eine entlang der Rohrachse verlaufende Transportschnecke 10 angeordnet.

Bei dem abgewinkelten Fallrohr 5 gemäß Figur 1 ist der Antrieb 11 auf einem Ansatz im abgewinkelten Bereich 7 vorgesehen, wobei die Antriebswelle 12 als Verbindungselement abgedichtet in den Fallrohrbereich 7 eingeführt und mit der Transportschnecke 10 verbunden wird. Die Längsachse 13 der Antriebswelle 12 entspricht hierbei der Längsachse 14 der Transportschnecke 10.

Der gemäß Figur 2 vorgesehene Antrieb 15 für die Transportschnecke 10 ist auf einem Absatz 16 etwa auf halber Höhe des Fallrohres 5 angeordnet. Zwischen der Abtriebswelle 17 des Antriebsmotors 15 und der Antriebswelle 18 der Transportschnecke 10 ist eine Gelenkwelle 19 vorgesehen. Oberhalb der Gelenkwelle 19 ist eine hier nur angedeutete Schutzvorrichtung 20 angeordnet, die insbesondere den Verbindungsbereich 21 zwischen dem einen Gelenkwellenende und dem freien Ende der Antriebswelle 18 abdeckt.

In beiden Figuren ist oberhalb der Transportschnecke 10 eine Lockerungsvorrichtung 22 vorgesehen, die in diesen Beispielen aus mit der zugehörigen Antriebswelle 12 bzw. 18 verbundenen, im wesentlichen radial sich erstreckenden Stangen 23 gebildet ist. Durch diese Maßnahme kann die Transportschnecke 10 axial relativ kurz bauend ausgebildet werden. Brückenbildungen oberhalb der Transportschnecke 10 werden infolge der mit der Antriebswelle 12 bzw. 18 umlaufenden Lockerungseinrichtung 22 weitestgehend vermieden und gewährleisten somit einen störungsfreien Materialdurchsatz. Die Transportschnecke 10 drückt das Material gegen die mit Federn ausgerüstete Verschlußeinrichtung 9, die sich in Abhängigkeit vom aufgebauten Druck bis zu einem vorgegebenen Wert öffnet und so ein staubarmes bzw. staubfreies Beladen sicherstellt. Durch Verschwenken bzw. Drehen des Fallrohres 5 um das Kardangelenk 6 sind u.a. die in den Figuren 1 und 2 angedeuteten Positionen des Fallrohres 5 möglich, wobei neben dem problemlosen Eintauchen in die Schiffluke 24 auch ein Trimmen des Laderaumes 1 realisiert werden kann, ohne daß es beim Ein- und Ausfahren des Fallrohres 5 bzw. beim Verschwenken zu Berührungen mit den Lukenwänden kommt.

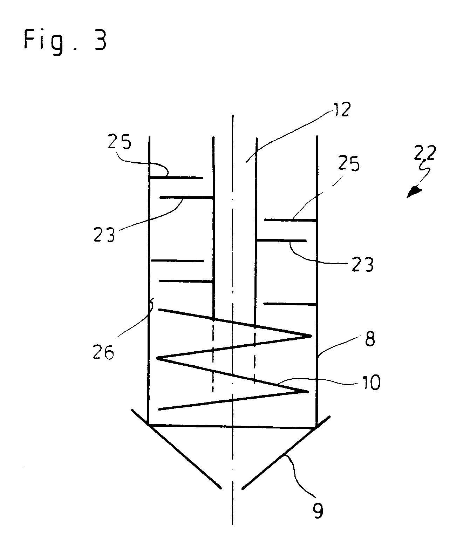

Figur 3 zeigt im wesentlichen den unteren Fallrohrbereich 8 samt Verschlußeinrichtung 9, Transportschnecke 10 und Lockerungsvorrichtung 22. Zusätzlich zu den mit der Antriebswelle 12 verbundenen Stangen 23 sind weitere Stangen 25 vorgesehen, die sich ausgehend von der Rohrwand 26 sich radial in Richtung der Antriebswelle 12 erstrecken, wobei die Stangen 25 axial zwischen den Stangen 23 vorgesehen sind, um so - falls notwendig - eine Zerkleinerung von zusammengebackenen Schollen herbeizuführen.

## Patentansprüche

1. Einrichtung zum staubarmen bzw. staubfreien Beladen umschlossener Räume mit schüttförmigen Gütern, insbesondere zum Beladen von Schiffen, mit einer im wesentlichen horizontalen Zuführeinrichtung (4), einer am freien Ende derselben vorgesehenen Beladevorrichtung in Form eines im wesentlichen durchgängigen Fallrohres (5), einer am unteren Ende des Fallrohres (5) angeordneten, sich in Abhängigkeit vom aufgebauten Druck bis zu einem vorgegebenen Wert öffnende Verschlußeinrichtung (9), **dadurch gekennzeichnet**, daß im unteren Bereich des Fallrohres (5) eine an sich bekannte Zwangsaustragsvorrichtung (10) in Form einer in der Längsachse des unteren Fallrohrbereiches angeordneten Transportschnecke, die über Verbindungselemente (17,19) mit einem außerhalb des Fallrohres (5) vorgesehenen Antrieb (11,15) zusammenwirkt, vorgesehen ist und daß das im Bereich seines oberen Endes gegenüber der es aufnehmenden Zuführeinrichtung (4) kardanisch (6) gelagerte Fallrohr (5) ohne weitere Gelenkpunkte und ohne teleskopartige Verbindungen ausgebildet ist.

2. Einrichtung nach Anspruch 1, **dadurch gekennzeichnet**, daß bei Verwendung eines abgewinkelten Fallrohres (5) der Antrieb (11) im abgewinkelten Bereich (7) vorgesehen ist, wobei das Verbindungselement (12) als geradlinig verlaufende Welle ausgebildet ist, deren Längsachse (13) mit der Längsachse (14) der Transportschnecke (10) übereinstimmt.

3. Einrichtung nach Anspruch 1, **dadurch gekennzeichnet**, daß das Fallrohr (5) als ggf. aus Segmenten zusammengesetztes zylindrisches Rohr ausgebildet ist, daß der Antrieb (15) etwa auf halber Höhe des Fallrohres (5) angeordnet ist, und daß das Verbindungselement (19) zwischen Antrieb (15) und Transportschnecke (10) als Gelenkwelle ausgebildet ist.

4. Einrichtung nach Anspruch 3, **dadurch gekennzeichnet**, daß innerhalb des Fallrohres (5) oberhalb der Gelenkwelle (19) bzw. deren Anlenkbereich an der Antriebswelle (18) der Transportschnecke (10) eine Schutzvorrichtung (20) vorgesehen ist.

5. Einrichtung nach Anspruch 4,
**dadurch gekennzeichnet**,
daß die Schutzvorrichtung (20) durch einen im Querschnitt etwa dreieckigen Sattel gebildet ist.

6. Einrichtung nach den Ansprüchen 1 bis 5, **dadurch gekennzeichnet**, daß oberhalb der Transportschnecke (10) eine Lockerungsvorrichtung (22) für die schüttförmigen Güter vorgesehen ist.

7. Einrichtung nach Anspruch 6, **dadurch gekennzeichnet**, daß die Lockerungsvorrichtung (22) durch ggf. abgewinkelte Stangen (23) gebildet ist.

8. Einrichtung nach Anspruch 7,
**dadurch gekennzeichnet**,
daß die Stangen (23) etwa radial oder tangential verlaufend an der Antriebswelle (12,18) der Transportschnecke (10) angeordnet sind.

9. Einrichtung nach den Ansprüchen 7 und 8,
**dadurch gekennzeichnet**,
daß die Stangen (23), in axialer Richtung gesehen, nach Art einer Schraubenlinie am Umfang der Antriebswelle (12,18) versetzt zueinander angeordnet sind.

10. Einrichtung nach den Ansprüchen 6 bis 9, **gekennzeichnet durch** weitere Lockerungsstäbe (25), die sich von der Rohrwand ausgehend radial nach innen erstrecken.

11. Einrichtung nach Anspruch 10,
**dadurch gekennzeichnet**,
daß die weiteren Lockerungsstäbe (25) axial zwischen den mit der Antriebswelle (12,18) verbundenen Lockerungsstäben (23) vorgesehen sind.

12. Einrichtung nach den Ansprüchen 1 bis 11, **dadurch gekennzeichnet**, daß die Transportschnecke (10) axial kurz bauend ausgebildet ausschließlich im Auslaufbereich (8) des Fallrohres (5) angeordnet ist und das durchgesetzte Material gegen den Druck der Verschlußeinrichtung (9) austrägt.

13. Einrichtung nach den Ansprüchen 1 bis 12, **dadurch gekennzeichnet**, daß die Windungen der Transportschnecke (10) mit einem das Geräusch reduzierenden Belag versehen sind.

14. Einrichtung nach Anspruch 13,
**dadurch gekennzeichnet**,
daß die Windungen mit einem Gummi- oder Kunststoffbelag versehen sind.

## Claims

1. Installation for low-dust or dust-free loading of enclosed areas with loose materials, in particular for loading ships, with an essentially horizontal delivery device (4), a loading device provided at the free end of the latter in the form of an essentially continuous fall tube (5), a sealing device (9), which is arranged at the lower end of the fall tube (5) and opens when the pressure has built up to a predetermined value, characterised in that in the lower area of the fall tube (5), a forced discharge device (10) known per se is provided in the form of a spiral conveyor arranged in the longitudinal axis of the lower area of the fall tube, said spiral conveyor interacting via connecting elements (17, 19) with a drive (11, 15) provided outside the fall tube (5), and that the fall tube (5) mounted by cardan joint (6) in the area of its upper end opposite the delivery device (4) holding it is constructed without any further pivot points and without any telescopic connections.

2. Installation according to Claim 1, characterised in that when an angled fall tube (5) is used, the drive (11) is provided in the angled area (7), in which case the connecting element (12) is constructed in the form of a linear shaft, the longitudinal axis (13) of which coincides with the longitudinal axis (14) of the spiral conveyor (10).

3. Installation according to Claim 1, characterised in that the fall tube (5) is optionally constructed as a cylindrical tube composed of segments; that the drive (15) is arranged approximately half way along the fall tube (5); and that the connecting element (19) is constructed between the drive (15) and the spiral conveyor (10) as a cardan shaft.

4. Installation according to Claim 3, characterised in that a protection device (20) is provided inside the fall tube (5) above the cardan shaft (19) or its coupling area on the drive shaft (18) of the spiral conveyor (10).

5. Installation according to Claim 4, characterised in that the protection device (20) is formed by a saddle with an approximately triangular cross-section.

6. Installation according to Claims 1 to 5, characterised in that an aerating device (22) is provided for the loose materials above the spiral conveyor (10).

7. Installation according to Claim 6, characterised in that the aerating device (22) is formed by optionally angled rods (23).

8. Installation according to Claim 7, characterised in that the rods (23) are arranged to extend approximately radially or tangentially on the drive shaft (12, 18) of the spiral conveyor (10).

9. Installation according to Claims 7 and 8, characterised in that viewed in axial direction, the rods (23) are staggered in relation to one another on the periphery of the drive shaft (12, 18) in the manner of a helix.

10. Installation according to Claims 6 to 9, characterised by further aerating rods (25) extending radially inwards from the tube wall.

11. Installation according to Claim 10, characterised in that the further aerating rods (25) are provided axially between the aerating rods (23) connected to the drive shaft (12, 18).

12. Installation according to Claims 1 to 11, characterised in that the spiral conveyor (10) is of axially short construction and arranged solely in the discharge area (8) of the fall tube (5) and discharges the material passed through the latter against the pressure of the sealing device (9).

13. Installation according to Claims 1 to 12 characterised in that the spirals of the spiral conveyor (10) are provided with a noise-reducing lagging.

14. Installation according to Claim 13, characterised in that the spirals are provided with a rubber or plastic lagging.

## Revendications

1. Installation pour le chargement avec un peu ou pas de poussière d'enceintes avec des matières en vrac, en particulier pour le chargement de bateaux, munie d'une installation d'amenage essentiellement horizontale (4), d'un dispositif de chargement prévu à l'extrémité libre de celle-ci, sous forme d'un tuyau de descente essentiellement courant (5), d'une installation de fermeture (9) disposée à l'extrémité inférieure du tuyau de descente (5) et s'ouvrant en fonction de la pression établie jusqu'à une valeur donnée, caractérisée en ce que, dans la zone inférieure du tuyau de descente (5) est prévu un dispositif de déversement forcé (10) connu en soi, sous forme d'une vis de transport disposée dans l'axe longitudinal de la zone inférieure du tuyau de descente et qui agit par l'intermédiaire d'éléments de fixation (17, 19) avec une commande (11, 15) prévue en dehors du tuyau de descente (5) et en ce que le tuyau de descente (5) logé à la Cardan (6) dans la zone de son extrémité supérieure en face de l'installation d'amenage (4) qui reçoit celle-ci est conçu sans points d'articulation supplémentaires ni assemblages télescopiques.

2. Installation selon la revendication 1, caractérisée en ce que, lors de l'utilisation d'un tuyau de descente coudé (5), la commande (11) est prévue dans la zone coudée (7), l'élément de fixation (12) étant conçu en tant qu'arbre rectiligne dont l'axe longitudinal (13) coïncide avec l'axe longitudinal (14) de la vis de transport (10).

3. Installation selon la revendication 1, caractérisée en ce que le tuyau de descente (5) est conçu en tant que tuyau cylindrique composé de segments, en ce que la commande (15) est disposée pratiquement à mihauteur du tuyau de descente (5) et en ce que l'élément de fixation (19) est conçu en tant qu'arbre de transmission entre la commande (15) et la vis de transport (10).

4. Installation selon la revendication 3, caractérisée en ce qu'à l'intérieur du tuyau de descente (5), au-dessus de l'arbre de transmission (19) ou de sa zone d'articulation à l'arbre de commande (18) de la vis de transport (10) est prévu un dispositif de sécurité (20).

5. Installation selon la revendication 4, caractérisée en ce que le dispositif de sécurité (20) est constitué par une selle pratiquement triangulaire dans la section transversale.

6. Installation selon les revendications 1 à 5, caractérisée en ce qu'au-dessus de la vis de transport (10) est prévu un dispositif de désagrégation (22) pour les matières en vrac.

7. Installation selon la revendication 6, caractérisée en ce que le dispositif de désagrégation (22) est constitué par des tiges le cas échéant coudées (23).

8. Installation selon la revendication 7, caractérisée en ce que les tiges (23) sont disposées pratiquement radialement ou tangentiellement sur l'arbre de commande (12, 18) de la vis de transport (10).

9. Installation selon les revendications 7 et 8, caractérisée en ce que les tiges (23), considérées dans le sens axial, sont décalées les unes par rapport aux autres à la périphérie de l'arbre de commande (12, 18), à la manière d'une hélice.

10. Installation selon les revendications 6 à 9, caractérisée par des barres de désagrégation supplémentaires (25) qui s'étendent radialement vers l'intérieur à partir de la paroi du tuyau.

11. Installation selon la revendication 10, caractérisée en ce que les barres de désagrégation supplémentaires (25) sont prévues axialement entre les barres de désagrégation (23) assemblées avec l'arbre de commande (12, 18).

12. Installation selon les revendications 1 à 11, caractérisée en ce que la vis de transport (10) conçue axialement courte est disposée exclusivement dans la zone de sortie (8) du tuyau de descente (5) et décharge la matière traversée contre la pression de l'installation de fermeture (9).

13. Installation selon les revendications 1 à 12, caractérisée en ce que les spires de la vis de transport (10) sont munies d'un revêtement réduisant le bruit.

14. Installation selon la revendication 13, caractérisée en ce que les spires sont munies d'un revêtement en caoutchouc ou en matière synthétique.
